# EUROPÄISCHE PATENTSCHRIFT

(11) **EP 2 044 978 B1**
(45) Veröffentlichungstag und Bekanntmachung des Hinweises auf die Patenterteilung: **05.04.2017**
(21) Anmeldenummer: 08015366.1
(22) Anmeldetag: 30.08.2008
(51) Int. Cl.: A62C 2/14, F16L 55/10

(54) **Brandschutz-Absperrung für Rohrleitungen**
Flame-retardant shielding for conduits
Clapet coupe-feu pour conduites

(30) Priorität: 06.10.2007 DE 102007048035
(43) Veröffentlichungstag der Anmeldung: 08.04.2009
(73) Patentinhaber: Bartholomäus, Gert, 89607 Emerkingen (DE)
(72) Erfinder: Fiderer, Stefan, 89607 Emerkingen (DE)
(74) Vertreter: Riebling, Peter

(56) Entgegenhaltungen:
- EP-A- 1 038 555
- DE-A1- 10 133 185

## Beschreibung

Gegenstand der Erfindung ist eine Brandschutzeinrichtung für Rohrleitungen nach dem Oberbegriff des Patentanspruches 1.

Eine solche Brandschutzeinrichtung ist beispielsweise mit dem Gegenstand der DE 101 33 185 A1 bekannt geworden. Diese zeigt eine Vorrichtung zur rauch- und feuersicheren Schließung des Strömungsweges in Rohrleitungen. Bei der Vorrichtung handelt es sich um ein Klappenblatt, das in die Rohrleitung eingesetzt wird und sich im Auslösefall in zwei Dimensionen bewegt.
Die Klappe besteht aus drei biegesteifen Platten, die jeweils über Scharniere verbunden sind. Entscheidend ist dabei, dass alle Platten an einer Grundplatte über Scharniere befestigt sind. Im Brandfall klappt zuerst der untere Teil und danach der mittlere Teil mit den beiden seitlichen Teilen aus.
Bei der DE 101 33 185 A1 besteht jedoch der Nachteil, dass dieser Vorgang keine hohe Betriebs- bzw. Prozesssicherheit darstellt, da der aufwendige Klappmechanismus der einzelnen Teile durch Verschmutzungen oder ein Verklemmen leicht behindert werden kann. Durch den einseitig, am Rohrstutzen angeordneten Faltmechanismus ist ein unerwünscht hoher Aufbau mit der Gefahr der Behinderung des Luftdurchgangs gegeben.

Die Druckschriften DE 199 38 498 B4 und DE 197 01 358 A1 schlagen als Anordnungen jeweils sogenannter Schmetterlingsklappen vor, deren Schwenkachse in den Mittenbereich des Rohrquerschnittes verlegt ist und demzufolge frei im Durchströmungsquerschnitt der Rohrleitung liegt. Dadurch besteht eine Beeinträchtigung der Funktion bei hohen Verschmutzungsgraden.

Der Erfindung liegt deshalb die Aufgabe zugrunde, eine Brandschutzeinrichtung ausgehend von der DE 101 33 185 A1 so weiterzubilden, dass sie auf wesentlich kleinerem Einbauraum ein gleiches Luftdurchströmungsvolumen bietet und dass sie einfacher und kostengünstiger einbaubar ist.

Zur Lösung der gestellten Aufgabe ist die Erfindung durch die technische Lehre des Anspruches 1 gekennzeichnet.

Übereinstimmend mit den Merkmalen der DE 101 33 185 A1 hat die vorliegende Erfindung die Eigenschaft, dass die Schwenkachse der jeweiligen Verschlussklappe senkrecht zur Längsachse des Rohrgehäuses ausgebildet ist und hierbei in den Wandbereich des Rohrgehäuses hineinverlegt ist.

Neu und erfinderisch gegenüber dem Stand der Technik ist jedoch, dass erfindungsgemäß die Verschlussklappe als biegbare oder faltbare Klappe ausgebildet ist, die im Ruhezustand aus zwei vollausgestreckten Verschlussklappen besteht.

In einer bevorzugten Ausführung besteht sie aus mehreren biegeelastisch miteinander verbundenen Teilsegmenten, die sich im hochgeklappten und funktionslosen Zustand etwa formschlüssig an den runden Querschnitt des rund ausgebildeten Mittelteils anlegen und die sich im Funktionszustand (abgeschwenkter Zustand) formschlüssig in den lichten Querschnitt des rund ausgebildeten Rohrgehäusemittelteils einlegen.

Mit der gegebenen technischen Lehre ergibt sich der wesentliche Vorteil, dass nun erfindungsgemäß das Mittelteil des Rohrgehäuses auch aus einem runden Querschnitt besteht und nicht mehr aus einem rechteckigen Querschnitt, wie es die DE 196 43 854 A1 lehrt. Aus diesem Grunde ist es auch nicht mehr erforderlich, eine rechteckförmige Verschlussklappe zu verwenden, wie es aus der DE 196 43 854 A1 bekannt ist.

Erfindungsgemäß wird demzufolge eine aus mehreren Teilen (oder Segmenten) bestehende Verschlussklappe verwendet, die im hochgeschwenkten Zustand sich formschlüssig an den etwa runden Wandquerschnitt des Mittelteils anschmiegt und die mit elastischen Eigenschaften versehen ist, um sich im Funktionszustand (herabgeschwenkte Lage) vollständig zu entfalten und aufzuklappen und hierbei eine flache ebene Klappe bildet, die den Querschnitt des Mittelteils des Rohrgehäuses verschließt.

Die vorliegende Erfindung sieht also vor, dass die Klappe im hochgeschwenkten Zustand sich etwa an die Formgebung des runden Wandquerschnittes des Mittelteils anschmiegt und im Funktionszustand sich streckt und auseinander klappt und hierbei ein flaches ebenes Teil bildet.

Die Erfindung umfasst mehrere Ausführungsformen, die alle als erfindungswesentlich beansprucht werden. Zunächst wird darauf hingewiesen, dass der einfachste Fall der vorliegenden Erfindung eine einzige Verschlussklappe ist, die aus mehreren Segmenten besteht und die demzufolge in der Lage ist, im hochgeschwenkten Zustand sich an den runden Wandquerschnitt anzuschmiegen und im herabgeschwenkten Zustand vollständig den Luftquerschnitt des Mittelteils auszufüllen. Eine solche einzige Verschlussklappe hat allerdings den Nachteil, dass sie eine relativ hohe Bauhöhe erfordert.

Um die Bauhöhe zu minimieren, sieht die Erfindung in einer zweiten Ausführungsform vor, dass es zwei Verschlussklappenteile gibt, die genau symmetrisch zueinander ausgebildet sind, wobei die eine Verschlussklappe an der einen Seite und die andere Verschlussklappe an der gegenüberliegenden Seite im Mittelteil des Rohrgehäuses angeordnet ist und die beiden Verschlussklappen im herabgeschwenkten Zustand sich gegenseitig überlappen und so ebenfalls flache ebene Platten bilden, die vollständig den Querschnitt des Mittelteils verschließen.

In einer dritten Ausführungsform ist es vorgesehen, dass drei Verschlussklappen vorhanden sind, deren Schwenkachsen im Winkel von 120° zueinander angeordnet sind und die sich ebenfalls jeweils im hochgeschwenkten Zustand an den Wandquerschnitt anschmiegen und im herabgeschwenkten Zustand ebene Verschlussklappen bilden, die sich gegenseitig überlappen und so den Verschlussquerschnitt für das Mittelteil des Rohrgehäuses bilden.

Der einfacheren Beschreibung wegen wird in der folgenden Beschreibung davon ausgegangen, dass es sich um zwei symmetrische Verschlussklappen handelt, die jeweils mit einander gegenüberliegenden Schwenkachsen ausgebildet sind. Die Beschreibung dieses Ausführungsbeispieles dient also nur der einfacheren Beschreibung wegen und beschränkt nicht den Schutzbereich der Erfindung.

Ferner sieht die Erfindung mehrere Ausführungsformen vor, wie die Biegbarkeit der einzelnen Verschlussklappen so ausgebildet sein kann, sodass sie sich im hochgeschwenkten Zustand an den runden Innenquerschnitt des Mittelteils des Rohrgehäuses anschmiegen und im herabgeschwenkten Zustand etwa gerade ebene Plattenstücke bilden, welche den lichten Querschnitt des Mittelteils verschließen.

In einer ersten Ausgestaltung ist es vorgesehen, dass die Verschlussklappe aus mehreren Klappensegmenten besteht, wobei der einfacheren Beschreibung wegen 3 Segmente bevorzugt werden, so dass an einem Mittelsegment, welches federbelastet schwenkbar in einer Schwenkachse im Wandbereich des Mittelteils des Rohrgehäuses gehalten ist, jeweils links und rechts Seitensegmente federbelastet biegbar befestigt sind.

Eine solche federbelastet biegbare Befestigung der Seitensegmente an dem starren Mittelsegment kann beispielsweise durch eine Biegefeder erfolgen, welche durch Nieten oder andere Befestigungsmittel die Seitensegmente mit dem Mittelsegment verbindet. Auf diese Weise sind die Seitensegmente in Schwenkachsen, welche etwa senkrecht zur Schwenkachse des Mittelsegmentes sind, an dem Mittelsegment biegbar und federbelastet befestigt.

Im hochgeschwenkten Zustand, wenn sich das Mittelsegment etwa parallel zur Wandfläche des Mittelteils befindet, legen sich somit die Seitensegmente federbelastet an den Innenquerschnitt der Wandung des Mittelteils an, wobei das Biegeelement (z. B. eine Biegefeder) entsprechend Federvorspannung ausübt.

Sobald das Mittelsegment aufgrund einer Federvorspannung und einer dort angeordneten Schenkelfeder in den Funktionszustand heruntergeschwenkt wird, biegt sich auch das Biegeelement (Biegefeder) im Verbindungsbereich zwischen dem Mittelsegment und den beiden sich daran anschließenden Seitensegmenten, so dass die Seitensegmente sich strecken und etwa in einer Ebene mit dem Mittelsegment verlaufen und so eine durchgehende Platte zum Verschluss des lichten Querschnittes des Mittelteils ergeben.

Statt der Anordnung von segmentartigen Seitenplatten, die über Biegeelemente an dem Mittelsegment angeschlossen sind, gibt es jedoch noch andere Ausführungsformen, die ebenfalls im Rahmen der vorliegenden Erfindung als erfindungswesentlich beansprucht werden.

So kann es in einer anderen Ausgestaltung vorgesehen sein, dass insgesamt die Verschlussklappe (oder vielmehr entsprechend dem Ausführungsbeispiel die Verschlussklappen-Hälfte) insgesamt aus einem biegbaren Material, z. B. aus einer Federstahlplatte besteht.

Diese Federstahlplatte insgesamt bildet dann die Verschlussklappen-Hälfte und ist somit in der Lage, sich im hochgeschwenkten Zustand an den Wandquerschnitt der runden Wandung des Mittelteils anzuschmiegen und im herabgeschwenkten Zustand eine etwa gerade ebene Platte zu bilden.

Statt der hier beschriebenen drei Segmente (Mittelsegment und zwei Seitensegmente) ist natürlich auch die Möglichkeit gegeben, lediglich zwei Segmente zu verwenden oder mehr als drei Segmente.

Im Übrigen ist es nicht unbedingt lösungsnotwendig, das Verbindungsteil zwischen diesen Segmenten als Biegefeder auszubilden. Es kann auch ein Verbindungselement sein, welches keine zusätzliche Federkraft auf die Segmente ausübt.

In einer Weiterbildung der Erfindung ist es im Übrigen vorgesehen, dass im Rückseitenbereich jede Verschlussklappe mit einer Intumeszenz-Platte verbunden ist und die Intumeszenz-Platte ebenfalls ein bestimmtes Biegevermögen aufweist, so dass sie insgesamt die aus mehreren Segmenten bestehende Verschlussklappe von hinten her abdeckt und mit diesen Klappensegmenten über Nieten oder andere Verbindungsmittel verbunden ist. Eine federbelastete Biegung ist bei dieser Platte nicht notwendig. Es reicht, wenn sie sich an die segmentierten Teilplatten anlegt und deren Bewegungsspiel mit macht.

In einer Weiterbildung der Erfindung ist es im Übrigen vorgesehen, dass die Verschlussklappe, die gegebenenfalls aus mehreren Segmenten besteht, doppelt ausgebildet ist und zwischen den beiden Schichten der Verschlussklappe ein Zwischenraum angeordnet ist, der von dem Intumeszenz-Material ausgefüllt ist. Es ergibt sich somit eine sandwichartig ausgebildete Verschlussklappe, wobei die beiden äußeren Schichten des Sandwich-Aufbaus aus den aus Metallmaterial oder einem anderen temperaturbeständigen Baustoff bestehenden Verschlussklappen besteht, während der Innenraum von dem Intumeszenz-Material ausgefüllt ist.

In einer Weiterbildung dieser Idee kann es auch vorgesehen sein, dass ein Intumeszenz-Material als rohrförmiges Material an der Innenwandung des Mittelteils des Rohrgehäuses angeordnet ist, d. h. im Zwischenraum zwischen den Verschlussklappen und der Innenwandung des Mittelteils des Rohrgehäuses.
Es versteht sich von selbst, dass die vorher beschriebenen Ausführungsformen, die verschiedene Einbauorte für Intumeszenz-Platten oder Rohrquerschnitte beschreiben, auch weggelassen werden können und der Brandschutz allein durch die segmentierten Verschlussklappen erreicht wird.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Es zeigen:
- Figur 1:: perspektivische Ansicht einer Brandschutzeinrichtung nach der Erfindung
- Figur 2:: eine gleiche Darstellung wie Figur 1 mit Angabe weiterer Einzelheiten

- Figur 3:: ein Längsschnitt durch die Brandschutzeinrichtung mit Ansicht einer wandseitig angeordneten Verschlussklappe
- Figur 4:: Längsschnitt durch die Anordnung nach Figur 1 bis Figur 3 mit Darstellung eines Schutzrohres als Verschmutzungsschutz
- Figur 5:: eine Obenansicht der Brandschutzeinrichtung mit den zwei geschlossenen Verschlussklappen
- Figur 6:: eine Untenansicht der Brandschutzeinrichtung mit einer einzigen geschlossenen Verschlussklappe, während die andere in Offenstellung ist
- Figur 7:: die gegenüber Figur 6 um 180° gedrehte Darstellung
- Figur 8:: ein weiteres Ausführungsbeispiel mit schematisierter Darstellung der Verwendung von drei Verschlussklappen

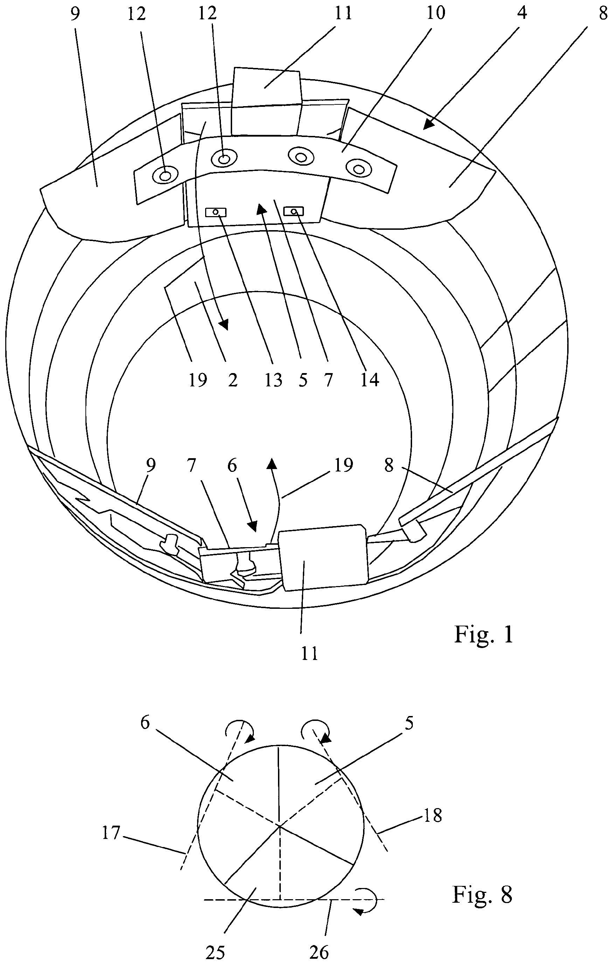

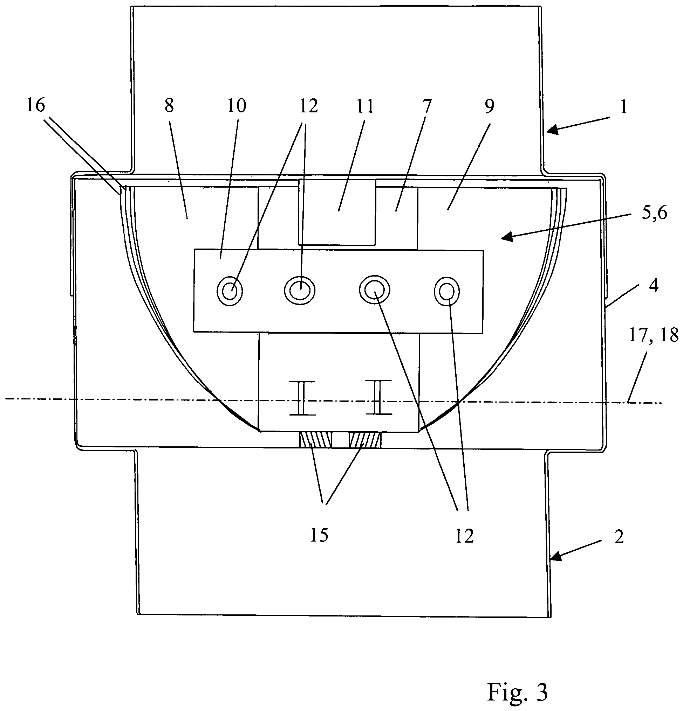

In den Figuren 1 bis 4 besteht die Brandschutzeinrichtung (siehe insbesondere Figur 3) aus einem rundprofilierten Rohrgehäuse-Oberteil, welches über Verbindungsabschnitte in ein rundprofiliertes Mittelteil 4 übergeht, welches seinerseits wiederum in ein rundprofiliertes Rohrgehäuse-Unterteil 2 übergeht. Es versteht sich von selbst, dass die genannten drei Teile 1, 2, 4 auch werkstoffeinstückig miteinander verbunden sein können. Lediglich der Einfachheit halber sind sie in den Zeichnungen als drei unterschiedliche Teile dargestellt.

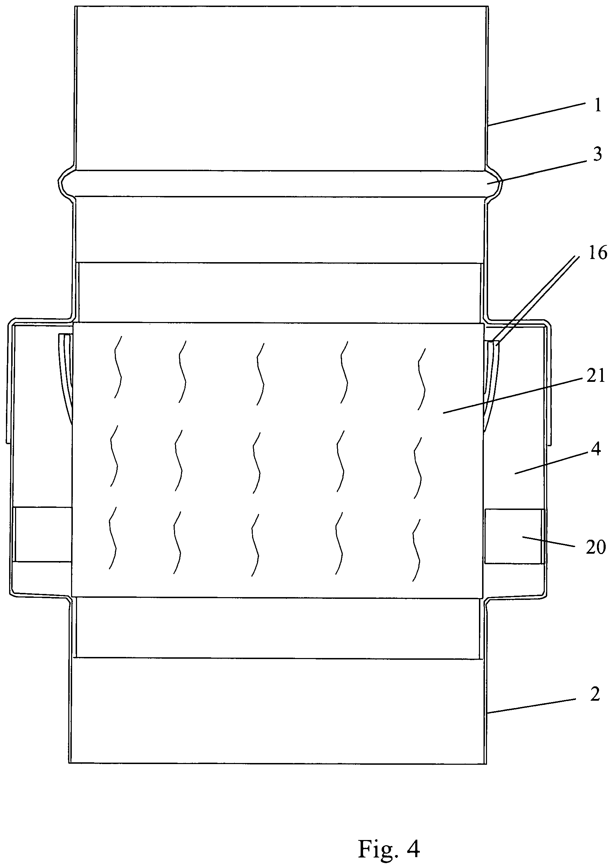

In Figur 4 ist noch dargestellt, dass im Rohrgehäuse-Oberteil eine Rundsicke 3 vergrößerten Durchmessers angeordnet ist. Diese Rundsicke 3 bildet eine formschlüssige Verbindung des Rohrgehäuse-Oberteils für den Deckenverguss, weil dort die Vergussmasse sich anlagert und damit eine gute Befestigung gegeben ist.

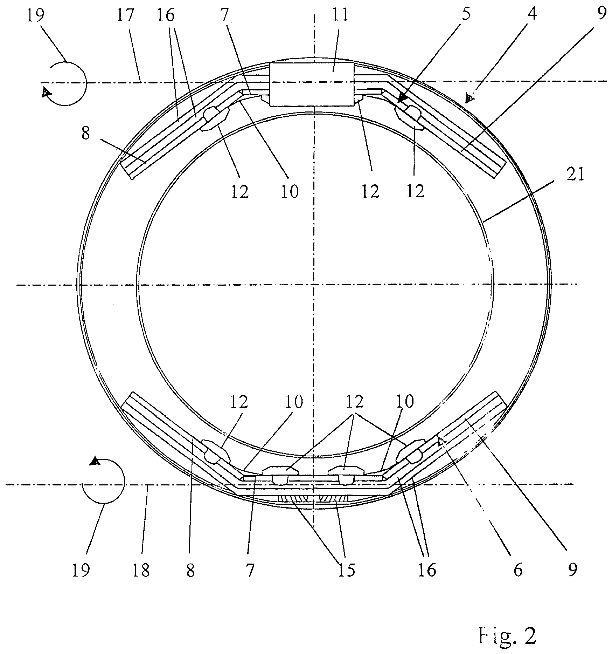

In Figur 1 ist erkennbar, dass zwei segmentierte Verschlussklappen-Teile 5, 6 einander gegenüberliegend angeordnet sind, wobei die beiden Schwenkachsen 17, 18 (siehe Figur 2) ebenfalls einander gegenüberliegend vorgesehen sind und jedes Verschlussklappenteil 5,6 genau gleich ausgebildet ist. Die federbelastete Verschwenkung jeder Verschlussklappe 5, 6 erfolgt in den Pfeilrichtungen 19. Es genügt deshalb für die weitere Beschreibung, lediglich ein Verschlussklappenteil 5 oder 6 näher zu beschreiben.

Jedes Verschlussklappenteil 5, 6 besteht hierbei aus einem Mittelsegment 7, welches etwa rechteckförmig ausgebildet ist und welches federbelastet mit Hilfe einer Schenkelfeder 15 an der Seitenwand des Mittelteils 4 schwenkbar gelagert ist.

Das etwa rechteckförmige Mittelsegment 7 ist in seinen Seitenbereichen über entsprechende Anschlusskanten mit zwei Seitensegmenten 8, 9 über jeweils eine gemeinsame Biegefeder 10 miteinander verbunden. Die Verbindung erfolgt hierbei über Nieten 12. Die Seitensegmente 8, 9 sind deshalb separate Teile, die nur über die Biegefeder randseitig mit dem Mittelsegment 7 verbunden sind. Die sich zwischen den Segmenten 7-9 ergebenden Längsschlitze dienen zur Erreichung eines Bewegungsspiels.

Um jeden Verschlussklappen-Teil 5, 6 in hochgeschwenkter Stellung entgegen der Kraft der jeweils zugeordneten Schenkelfeder 15 in der Ruhestellung zu halten, sind jeweils U-Profile 11 vorgesehen, die aus einem leicht schmelzbaren Kunststoff bestehen. Im Brandfall schmilzt somit das U-Profil, welches die jeweilige Verschlussklappe 5, 6 in der hochgeschwenkten Stellung hält und die Schenkelfeder 15 lässt dann jeden Verschlussklappen-Teil in seine geschlossene Stellung verschwenken.

In Figur 1 sind die Schenkelfeder-Enden 13, 14 der Schenkelfeder 15 erkennbar. Diese Enden 13, 14 sind in dem Mittelsegment 7 verankert.

Die Figur 2 zeigt, dass im hinteren Bereich jedes Verschlussklappen-Teils 5, 6 noch eine aus zwei Schichten bestehende Intumeszenz-Platte 16 angeordnet ist. Sie besteht also aus zwei zueinander parallelen Schichten eines Intumeszenz-Plattenmaterials.

Ferner ist noch eingezeichnet, dass zum weiteren Schutz vor Verschmutzungen ein Schutzrohr 21 mindestens im Mittelteil 4 angeordnet ist, welches das Mittelteil durchsetzt und welches mit seinen oberen und unteren Enden jeweils in das Rohrgehäuse-Oberteil bzw. das Rohrgehäuse-Unterteil 1, 2 hineinragt. Das aus einem leicht schmelzbaren Kunststoff bestehende Schutzrohr 21 schützt somit vollständig den Schwenkmechanismus der Verschlussklappenteile 5, 6 gegen Verschmutzung. Bevorzugt ist das Schutzrohr durchsichtig ausgebildet, um die dahinter liegende Anordnung der Verschlussklappen 5, 6 im eingebauten Zustand der Brandschutzeinrichtung sichtbar zu machen.

In Figur 2 sind auch die jeweiligen Schwenkachsen 17, 18 eingezeichnet, die genau parallel zueinander angeordnet sind und etwa senkrecht zur Längsachse des Mittelteils 4. Die Verschwenkung der jeweiligen Verschlussklappen-Teile 5, 6 erfolgt daher in den Pfeilrichtungen 19 um die Schwenkachsen 17, 18.

Die Figur 3 zeigt die Seitenansicht der Anordnung, wie sie im Wesentlichen auch in perspektivischer Darstellung in Figur 1 dargestellt ist. Dort ist die eine Schenkelfeder 15 erkennbar, die zweiteilig ausgebildet ist, um eine hohe Federkraft zu erreichen.

Die Federkraft der Schenkelfeder 15 sollte so hoch sein, dass die Andrückkraft des Verschlussklappen-Teils 5, 6 im Bereich der Wandung des Mitteilteils 4 so groß ist, dass sich die Seitensegmente 8, 9 etwa formschlüssig - unter Überwindung der Biegekraft der Biegefeder 10 an die Wandinnenseite anlegen, wie dies in Figur 1 dargestellt ist.

Damit ist gesorgt, dass kein Teil der Verschlussklappen 5, 6 in den Strömungsquerschnitt des Mittelteils 4 hineinragt und daher keinerlei Beeinträchtigung des Luftquerschnittes in der Brandschutzeinrichtung gegeben ist.

In der Figur 4 ist noch das vorher erwähnte Schutzrohr 21 dargestellt, welches den Innenraum des Mittelteils 4 ausfüllt. Die gehäuseseitigen Enden der Schenkelfedern 15 sind hierbei im Mittelteil 4 dadurch verankert, dass sie von einer ringsumlaufenden ringförmigen Pressringfeder an die Innenwandung des Mittelteils 4 angepresst werden. Auf diese Weise bedarf es keinerlei weiteren Verankerungsmittel, mit denen die gehäuseseitigen Enden der Schenkelfeder 15 an der Wandung des Mittelteils 4 verankert werden.

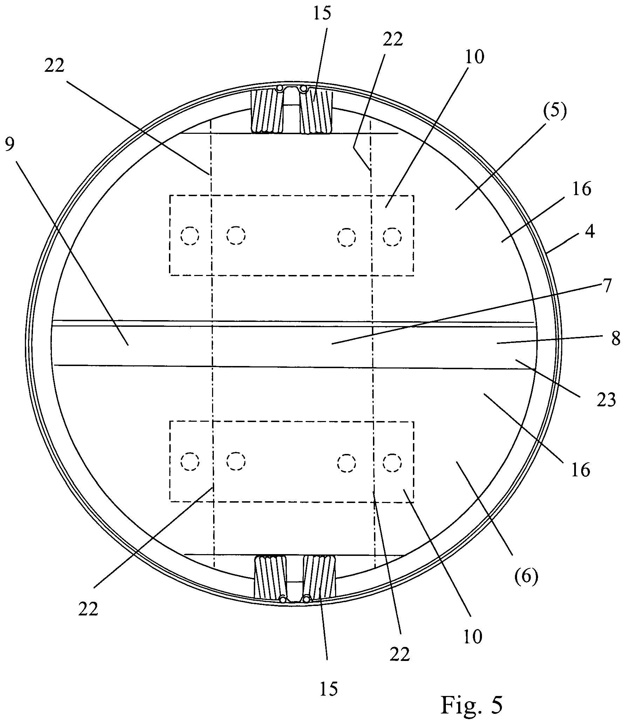

Die Figur 5 zeigt die Obenansicht auf die in der Funktionsstellung einwärts verschwenkten Verschlussklappen 5, 6, wo eine Ansicht auf die Intumeszenz-Platten 16 dargestellt ist. Aus diesem Grund sind die Biegefeder 10 und die dahinter liegenden Teile nur in strichpunktierter Linie dargestellt.

Es ist erkennbar, dass zur Verbesserung des Biegeverhaltens der jeweiligen Intumeszenz-Platte 16 biegungserleichternde Schlitze 22 in dem Material vorhanden sind, die jedoch nicht durchgehend ausgebildet sind, um diese Platte 16 nicht zu unterteilen und auseinander fallen zu lassen.

Sie überbrückt also die zwischen den Segmenten 7, 8, 9 sich bildenden Schlitze der Verschlussklappen 5, 6.

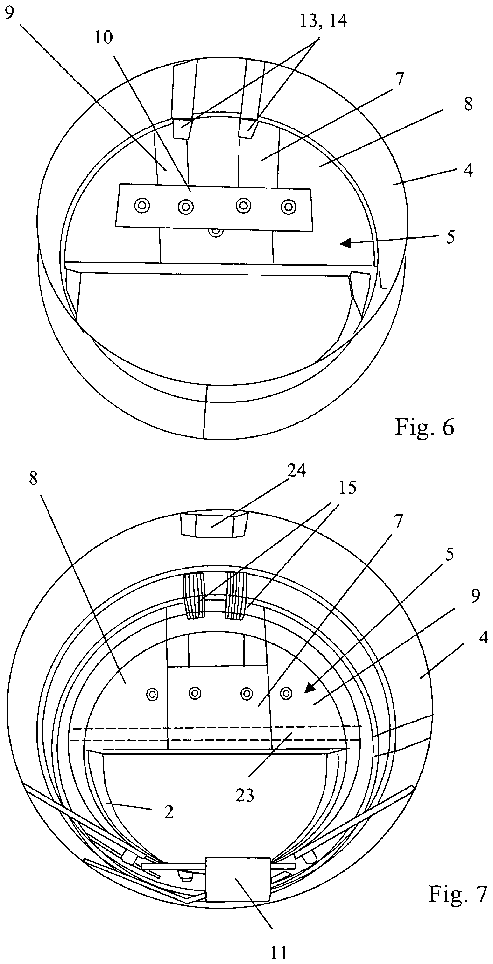

Die Figur 6 zeigt die Draufsicht auf eine einzige in die Funktionsstellung verschwenkte Verschlussklappe 5 mit Darstellung weiterer Einzelheiten, die bereits schon vorstehend beschrieben wurden. Gleichzeitig zeigt die Figur 7 die um 180° gedrehte Darstellung, wo erkennbar ist, dass die klappenseitigen Enden 13, 14 der Schenkelfeder 15 an dem Mittelsegment 7 gelagert sind, während die außenseitigen Enden durch einen gehäuseseitigen Pressring (nicht näher dargestellt) gehalten sind.

Die Figur 8 zeigt als abgewandeltes Ausführungsbeispiel, dass auch drei Verschlussklappen 5, 6, 25 vorhanden sein können und dass ebenfalls auch diese Verschlussklappen segmentiert ausgebildet sein können. Die Segmentgrenzen im Bereich der einzelnen Verschlussklappen-Teile 5, 6, 25 sind hierbei gestrichelt eingezeichnet.

Die Verschlussklappe 25 ist dann um die Schwenkachse 26 schwenkbar gelagert.

Insgesamt ergibt sich mit der vorliegenden Erfindung der Vorteil, dass eine absolut betriebssicher arbeitenden und von Verschmutzungen geschützte Brandschutzeinrichtung beschrieben wurde, die in einem rundprofilierten Mittelteil einer Rohrleitung eingebaut werden kann und so die Nachteile der DE 101 33 185 A1 vermeidet. Durch die Anordnung eines Schutzrohres ergibt sich eine besonders strömungsgünstige Anordnung, weil im Normalfall keinerlei Querschnitte der Verschlusseinrichtung im Luftstrom liegen, der erst im Brandfall das Schutzrohr abschmilzt und gleichzeitig auch die U-Profile 11, so dass erst dann im Brandfall die Verschlussklappen-Anordnung in Betrieb genommen wird.

Das das Mittelteil 4 durchsetzende Schutzrohr 21 sorgt auch für eine Dichtigkeit der gesamten Brandschutzeinrichtung gegenüber Überdruck, weil dieses Schutzrohr luftschlüssig sowohl im Rohrgehäuse-Oberteil 1 als auch im Rohrgehäuse-Unterteil 2 angeordnet ist. Eventuelle Undichtigkeiten im Bereich des Mittelteils 4 spielen dann keine Rolle.

### Zeichnungslegende

- 1.: Rohrgehäuse-Oberteil
- 2.: Rohrgehäuse-Unterteil
- 3.: Rundsicke
- 4.: Mittelteil
- 5.: Verschlussklappen-Teil
- 6.: Verschlussklappen-Teil
- 7.: Mittelsegment
- 8.: Seitensegment
- 9.: Seitensegment
- 10.: Biegefeder
- 11.: U-Profil
- 12.: Niete
- 13.: Schenkelfeder-Ende
- 14.: Schenkelfeder-Ende
- 15.: Schenkelfeder
- 16.: Intumeszenz-Platte
- 17.: Schwenkachse
- 18.: Schwenkachse
- 19.: Pfeilrichtung
- 20.: Pressringfeder
- 21.: Schutzrohr
- 22.: Schlitz (in 16)
- 23.: Überlappungsbereich
- 24.: Einpressung
- 25.: Verschlussklappen-Teil
- 26.: Schwenkachse

## Patentansprüche

1. Brandschutzeinrichtung für Rohrleitungen, insbesondere Lüftungsrohrleitungen mit einem in eine Rohrleitung einsetzbaren Gehäuse (1, 2, 4), das eine etwa parallel zur Ebene der Wandung des Gehäuses federbelastet verschwenkbare, klappenförmige Verschlusseinrichtung (5, 6) aufnimmt, deren Schwenkachse senkrecht zur Achse der Rohrleitung ausgerichtet ist, wobei die Verschlusseinrichtung durch eine Rückhaltevorrichtung (11) an der Wandseite des Gehäuses (4) gehalten ist, die bei einer erhöhten Temperatur durchschmilzt und die klappenförmige Verschlusseinrichtung (5, 6) für ihre Bewegung in die Schließstellung freigibt, wobei außerdem eine Auslösevorrichtung (15) vorgesehen ist, die nach Durchschmelzen der Rückhaltevorrichtung (11) die klappenförmige Verschlusseinrichtung (5, 6) in ihre Schließstellung bewegt, wobei das Gehäuse (1, 2, 4) mindestens in seinem die Verschlusseinrichtung (5, 6, 25) aufnehmenden Mittelteil (4) rundprofiliert ist, und die Verschlusseinrichtung aus mehreren faltbaren Segmenten (7, 8, 9) besteht deren Verbindungen als Biegefeder (10) ausgebildet sind und die sich an die rund gebogene Wandung des rundprofilierten Gehäuses (1, 2, 4) annähernd parallel anlegen, und in der hochgeschwenkten Ruhestellung eine an die rund gebogene Wandung angepasste Formgebung und in der abgeschwenkten Arbeitsstellung eine etwa gerade Flächenerstreckung aufweisen, **dadurch gekennzeichnet, dass** die Verschlusseinrichtung aus mindestens zwei einander gegenüberliegenden, aus den Segmenten (7, 8, 9) gebildeten Verschlussklappen (5, 6, 25) besteht.

2. Brandschutzeinrichtung nach Anspruch 1, **dadurch gekennzeichnet, dass** die Segmente (7, 8, 9) der Verschlussklappen (5, 6, 25) faltbar sind.

3. Brandschutzeinrichtung nach Anspruch 1 oder 2, **dadurch gekennzeichnet, dass** die Segmente (7, 8, 9) der Verschlussklappen (5, 6, 25) aus biegbarem Federstahlblech bestehen.

4. Brandschutzeinrichtung nach Anspruch 1 bis 3, **dadurch gekennzeichnet, dass** die Verschlussklappen (5, 6, 25) aus mehreren biegeelastisch miteinander verbundenen Teilsegmenten (7, 8, 9) bestehen, die sich im hochgeklappten und funktionslosen Zustand etwa formschlüssig an den runden Querschnitt des rund ausgebildeten Mittelteils (4) anlegen und die sich im Funktionszustand (abgeschwenkter Zustand) formschlüssig in den lichten Querschnitt des rund ausgebildeten Rohrgehäusemittelteils als Rohrverschluss einlegen.

5. Brandschutzeinrichtung nach einem der Ansprüche 1 bis 4, **dadurch gekennzeichnet, dass** drei einander gegenüberliegende Verschlussklappen (5, 6, 25) vorhanden sind.

6. Brandschutzeinrichtung nach einem der Ansprüche 1 bis 5, **dadurch gekennzeichnet, dass** die Rückseite der Verschlussklappen (5, 6, 25) mit einer Intumeszenz-Platte verbunden ist.

7. Brandschutzeinrichtung nach einem der Ansprüche 1 bis 6, **dadurch gekennzeichnet, dass** die Verschlussklappen (5, 6, 25), die gegebenenfalls aus mehreren Segmenten besteht, doppelt ausgebildet sind und zwischen den beiden Schichten einer Verschlussklappe ein Zwischenraum angeordnet ist, der von dem Intumeszenz-Material ausgefüllt ist.

8. Brandschutzeinrichtung nach einem der Ansprüche 1 bis 7, **dadurch gekennzeichnet, dass** ein Intumeszenz-Material als rohrförmiges Material an der Innenwandung des Mittelteils des Rohrgehäuses angeordnet ist, d. h. im Zwischenraum zwischen den Verschlussklappen und der Innenwandung des Mittelteils des Rohrgehäuses.

9. Brandschutzeinrichtung nach einem der Ansprüche 1 bis 8, **dadurch gekennzeichnet, dass** zum weiteren Schutz vor Verschmutzungen ein Schutzrohr (21) mindestens im Mittelteil (4) angeordnet ist, welches das Mittelteil durchsetzt und welches mit seinen oberen und unteren Enden jeweils in das Rohrgehäuse-Oberteil bzw. das Rohrgehäuse-Unterteil (1, 2) hineinragt.

10. Brandschutzeinrichtung nach Anspruch 9, **dadurch gekennzeichnet, dass** das Schutzrohr (21) durchsichtig ausgebildet ist.

## Claims

1. Fire protection arrangement for pipes, in particular ventilation pipes with a housing (1, 2, 4) which can be inserted into a pipe and accommodates a flap-shaped closing arrangement (5, 6) which is capable of swivelling approximately parallel to the plane of the wall of the housing under spring loading and the swivel axis of which is aligned perpendicular to the axis of the pipe, wherein the closing arrangement is held at the wall side of the housing (4) by a retaining device (11) which melts through at high temperature and releases the flap-shaped closing arrangement (5, 6) for its movement into the closing position, wherein additionally a release device (15) is provided which after the retaining device (11) has melted through moves the flap-shaped closing arrangement (5, 6) into its closing position, wherein the housing (1, 2, 4) has a round profile at least in its middle part (4) accommodating the closing arrangement (5, 6, 25), and the closing arrangement consists of a plurality of folding segments (7, 8, 9) the connections of which are embodied in the form of a flexible spring (10) and are applied approximately parallel on the round curved wall of the housing (1, 2, 4) with the round profile, and in the raised swivelled resting position have a shape adapted to the round curved wall and in the lowered working position have an approximately straight areal extension, **characterised in that** the closing arrangement comprises at least two closing flaps (5, 6, 25) which face one another and are formed of the segments (7, 8, 9).

2. Fire protection arrangement according to claim 1, **characterised in that** the segments (7, 8, 9) of the closing flaps (5, 6, 25) are able to fold.

3. Fire protection arrangement according to claim 1 or 2, **characterised in that** the segments (7, 8, 9) of the closing flaps (5, 6, 25) are made of flexible spring steel sheet.

4. Fire protection arrangement according to claims 1 to 3, **characterised in that** the closing flaps (5, 6, 25) comprise a plurality of part segments (7, 8, 9) which are connected with one another so that they can flex elastically and in the raised and inoperative state are applied in approximately form-fitting manner on the round cross-section of the round middle part (4) and in the operating state (lowered state) fit in form-fitting manner into the open cross-section of the middle part of the round pipe housing forming a pipe closure.

5. Fire protection arrangement according to one of claims 1 to 4, **characterised in that** there are three closing flaps (5, 6, 25) which face one another.

6. Fire protection arrangement according to one of claims 1 to 5, **characterised in that** the rear side of the closing flaps (5, 6, 25) is connected with an intumescent plate.

7. Fire protection arrangement according to one of claims 1 to 6, **characterised in that** the closing flaps (5, 6, 25) which optionally comprise a plurality of segments, are formed double and arranged between the two layers of a closing flap there is an intermediate space which is filled by the intumescent material.

8. Fire protection arrangement according to one of claims 1 to 7, **characterised in that** an intumescent material is arranged in the form of a pipe-shaped material on the inner wall of the middle part of the pipe housing, i.e. in the intermediate space between the closing flaps and the inner wall of the middle part of the pipe housing.

9. Fire protection arrangement according to one of claims 1 to 8, **characterised in that** for further protection against dirt a protective pipe (21) is arranged at least in the middle part (4), passing through the middle part with its upper and lower ends projecting respectively into the upper part of the pipe housing and the lower part of the pipe housing (1,2).

10. Fire protection arrangement according to claim 9, **characterised in that** the protective pipe (21) is transparent.

## Revendications

1. Dispositif coupe-feu pour conduites, en particulier pour conduites d'aération, avec un boîtier (1, 2, 4) apte à être inséré dans une conduite et recevant un dispositif de fermeture en forme de clapet (5, 6) qui est apte à pivoter, contraint par ressort, à peu près parallèlement au plan de la paroi dudit boîtier et dont l'axe de pivotement est perpendiculaire à l'axe de la conduite, le dispositif de fermeture étant maintenu contre le côté paroi du boîtier (4) par un dispositif de retenue (11) qui, en présence d'une température accrue, fond et libère le dispositif de fermeture en forme de clapet (5, 6) pour que celui-ci vienne dans sa position fermée, un dispositif de déclenchement (15) étant également prévu, qui, après fusion du dispositif de retenue (11), amène le dispositif de fermeture en forme de clapet (5, 6) dans sa position fermée, le boîtier (1, 2, 4) ayant un profil rond, au moins dans sa partie centrale (4) qui reçoit le dispositif de fermeture (5, 6, 25), et le dispositif de fermeture se composant de plusieurs segments pliables (7, 8, 9) dont les liaisons sont conçues comme un ressort de flexion (10), qui s'appliquent approximativement parallèlement contre la paroi courbe ronde du boîtier (1, 2, 4) à profil rond, et qui, dans la position de repos relevée, présentent une forme adaptée à la paroi courbe ronde et, dans la position de travail abaissée, présentent une extension de surface à peu près droite, **caractérisé en ce que** le dispositif de fermeture se compose d'au moins deux clapets (5, 6, 25) opposés formés des segments (7, 8, 9).

2. Dispositif coupe-feu selon la revendication 1, **caractérisé en ce que** les segments (7, 8, 9) des clapets (5, 6, 25) sont pliables.

3. Dispositif coupe-feu selon la revendication 1 ou 2, **caractérisé en ce que** les segments (7, 8, 9) des clapets (5, 6, 25) se composent de tôle d'acier à ressort flexible.

4. Dispositif coupe-feu selon les revendications 1 à 3, **caractérisé en ce que** les clapets (5, 6, 25) se composent de plusieurs segments partiels (7, 8, 9) qui sont reliés entre eux de manière élastique en flexion, qui, à l'état relevé et non fonctionnel, s'appliquent à peu près par complémentarité de forme contre la section transversale ronde de la partie centrale ronde (4) et qui, dans l'état fonctionnel (état abaissé), s'insèrent par complémentarité de forme dans la section transversale libre de la partie centrale ronde du boîtier de conduite, comme fermeture de conduite.

5. Dispositif coupe-feu selon l'une des revendications 1 à 4, **caractérisé en ce qu'**il y a trois clapets opposés (5, 6, 25).

6. Dispositif coupe-feu selon l'une des revendications 1 à 5, **caractérisé en ce que** la face arrière des clapets (5, 6, 25) est reliée à une plaque intumescente.

7. Dispositif coupe-feu selon l'une des revendications 1 à 6, **caractérisé en ce que** les clapets (5, 6, 25) qui se composent éventuellement de plusieurs segments sont conçus en double, et entre les deux couches d'un clapet est disposé un espace intermédiaire qui est rempli du matériau intumescent.

8. Dispositif coupe-feu selon l'une des revendications 1 à 7, **caractérisé en ce qu'**un matériau intumescent est disposé sur la paroi intérieure de la partie centrale du boîtier de conduite sous la forme d'un matériau tubulaire, c'est-à-dire dans l'espace intermédiaire entre les clapets et la paroi intérieure de la partie centrale du boîtier de conduite.

9. Dispositif coupe-feu selon l'une des revendications 1 à 8, **caractérisé en ce que** pour une protection supplémentaire à l'encontre des saletés, il est prévu au moins dans la partie centrale (4) un tube de protection (21) qui traverse ladite partie centrale et qui dépasse avec ses extrémités supérieure et inférieure dans les parties supérieure et inférieure (1, 2), respectivement, du boîtier de conduite.

10. Dispositif coupe-feu selon la revendication 9, **caractérisé en ce que** le tuyau de protection (21) est translucide.
